# FASCICULE DE BREVET EUROPEEN

(11) **EP 0 727 301 B1**
(45) Date de publication et mention de la délivrance du brevet: **21.11.2001**
(21) Numéro de dépôt: 96490004.7
(22) Date de dépôt: 18.01.1996
(51) Int. Cl.: B29C 51/14, B32B 3/22, B32B 5/24

(54) **Procédé de fabrication d'un objet multicouche**
Verfahren zum Herstellen eines mehrschichtigen Gegenstandes
Process for making a multilayered article

(30) Priorité: 20.01.1995 FR 9500857
(43) Date de publication de la demande: 21.08.1996
(73) Titulaire: PLASTIC OMNIUM AUTO INTERIEUR, 69007 Lyon (FR)
(72) Inventeur: Duriez, Dominique, F-59147 Gondecourt (FR); D'Hooren, Jean-Jacques, F-59147 Gondecourt (FR); Cottignies, Bernard, F-59147 Gondecourt (FR)
(74) Mandataire: Duthoit, Michel

(56) Documents cités:
- EP-A- 0 367 336
- DE-A- 3 800 218
- DE-A- 4 237 728
- FR-A- 2 256 031
- FR-A- 2 282 335
- GB-A- 1 376 198
- US-A- 3 320 108
- US-A- 4 327 049
- US-A- 5 336 352
- PATENT ABSTRACTS OF JAPAN vol. 10, no. 357 (M-540) [2414] , 2 Décembre 1986 & JP-A-61 154831 (HINO MOTORS LTD)
- PATENT ABSTRACTS OF JAPAN vol. 11, no. 105 (M-577), 3 Avril 1987 & JP-A-61 253242 (KASAI KOGYO CO LTD), 11 Novembre 1986,
- DATABASE WPI Week 8840 Derwent Publications Ltd., London, GB; AN 88-281416 XP002000989 & JP-A-63 205 213 (HAYASHI TERENPU KK) , 24 Août 1980

## Description

La présente invention concerne un procédé de fabrication d'un objet multicouche, notamment destiné à l'habillage intérieur des carrosseries de véhicules.

Plus largement, elle trouvera son application dans tous les domaines de l'activité économique dans lesquels on souhaite habiller une surface pour lui conférer, par exemple, un aspect esthétique et/ou un toucher agréable.

En matière d'habillage intérieur de carrosserie de véhicule, il est connu du document DE-A-38 00 218 un procédé de fabrication d'un objet multicouche présentant des déformations en creux et/ou en bosses, plus ou moins importantes, suivant un profil déterminé, dans lequel :
- on prévoit entre un poinçon et une matrice d'un moule, une première couche d'un matériau constituant un insert, recouvert au moins partiellement d'une seconde couche, notamment textile, constituant une peau,
- on forme indépendamment un ou des pavés de mousse thermoplastique,
- on interpose le ou lesdits pavés de mousse entre ledit insert et ladite peau, dans ledit moule, au niveau d'une ou plusieurs zones prédéterminées, localisées en fonction des déformations,
- on presse ledit insert, ledit pavé de mousse et ladite peau entre ledit poinçon et ladite matrice pour obtenir ledit objet multicouche.

Le but de la présente invention est de proposer un procédé de fabrication qui permette d'obtenir un objet multicouche dont l'aspect esthétique et/ou la souplesse en surface, notamment au sommet des déformations, se trouvent améliorés, offrant ainsi un contact moelleux agréable au toucher sur sa ou ses faces visibles.

Un autre but de la présente invention est de proposer un procédé de fabrication qui permette d'obtenir un objet multicouche présentant, notamment au niveau des déformations, une peau parfaitement tendue sur son support et une meilleure adhésion entre les différentes couches.

D'autres buts et avantages de la présente invention apparaîtront au cours de la description qui va suivre qui n'est donnée qu'à titre indicatif et qui n'a pas pour but de la limiter.

La présente invention concerne un procédé de fabrication d'un objet multicouche, notamment destiné à l'habillage intérieur des carrosseries de véhicules, présentant des déformations en creux et/ou en bosses, plus ou moins importantes, suivant un profil déterminé, dans lequel on prévoit, entre un poinçon et une matrice d'un moule, une première couche d'un matériau constituant un insert, recouvert, au moins partiellement, d'une seconde couche, notamment textile, constituant une peau, dans lequel :
- on forme indépendamment un ou des pavés de mousse thermoplastique,
- on interpose le ou lesdits pavés de mousse entre ledit insert et ladite peau, dans ledit moule, au niveau d'une ou plusieurs zones prédéterminées, localisées en fonction des déformations,
- on presse ledit insert, ledit pavé de mousse et ladite peau entre ledit poinçon et ladite matrice pour obtenir ledit objet multicouche caractérisé par le fait que :
- l'on prévoit au moins une surépaisseur sur le pavé de mousse au niveau d'une ou plusieurs régions destinées à être placées en vis-à-vis des sommets desdites déformations.

L'invention sera mieux comprise si l'on se réfère à la description suivante ainsi qu'aux dessins en annexe qui en font partie intégrante

La figure 1 décrit, en vue de coupe, un exemple d'objet multicouche obtenu suivant le procédé de fabrication conforme à l'invention.

La figure 2 décrit, en vue de coupe, une première étape du mode particulier de mise en oeuvre du procédé de fabrication conforme à l'invnetion, permettant d'obtenir l'objet multicouche représenté à la figure 1 précédente.

La figure 3 décrit, en vue de coupe, une seconde étape de l'exemple particulier de mise en oeuvre du procédé de fabrication représentée à la figure 2 précédente.

La figure 4 décrit, en vue de coupe, un exemple de pavé de mousse utilisé suivant le procédé de fabrication conforme à l'invention.

La figure 5 décrit, en vue de coupe, un autre exemple d'objet multicouche obtenu suivant le procédé de fabrication conforme à l'invention, avec ledit pavé.

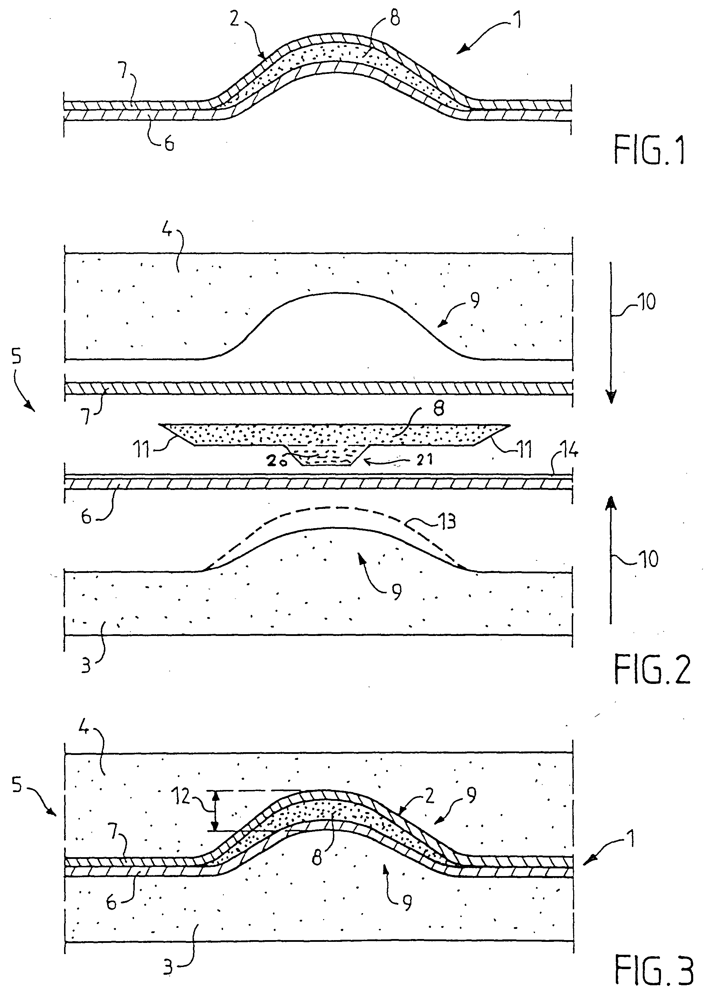

Comme représenté à la figure 1, l'objet multicouche 1 obtenu par le procédé de fabrication conforme à l'invention présente des déformations 2 en creux et/ou en bosses, plus ou moins importantes, suivant un profit déterminé.

Suivant cet exemple particulier, l'objet multicouche 1 constitue, par exemple, un panneau présentant un relief.

Il peut s'agir, par exemple, d'un panneau de portière de véhicule, comprenant notamment un accoudoir.

Par panneau, il faut entendre une pièce d'épaisseur faible par rapport à sa surface totale. Quant à l'accoudoir, il constitue un exemple de déformation 2 en creux et/ou en bosses.

Comme représenté à la figure 2, selon le procédé conforme à l'invention, on prévoit entre un poinçon 3 et une matrice 4 d'un moule 5, une première couche d'un matériau constituant un insert 6, recouvert, au moins partiellement, d'une seconde couche, notamment textile ou autre, constituant une peau 7.

Il est à noter que les termes « poinçon » et « matrice » ne présagent pas d'une orientation des éléments correspondants 3, 4 du moule 5 vis-à-vis de l'insert 6 et de la peau 7 de l'objet multicouche 1.

En effet, le procédé de fabrication conforme à l'invention peut s'appliquer quelle que soit l'orientation des déformations 2.

Dans l'exemple particulier représenté aux figures 1 à 3, l'insert 6 est prévu en vis-à-vis du poinçon 3 et la peau 7 en vis-à-vis de la matrice 4. Pour obtenir un autre profil, une orientation différente est tout à fait envisageable.

L'insert 6 joue le rôle, par exemple, de couche support.

On forme indépendamment un ou des pavés de mousse thermoplastique 8 et, comme représenté à la figure 2, on interpose le ou lesdits pavés de mousse 8 entre l'insert 6 et la peau 7, dans le moule 5, au niveau d'une ou plusieurs zones prédéterminées 9 localisées en fonction des déformations 2.

Le pavé de mousse thermoplastique 8 constitue, par exemple, une pièce sensiblement plane et de faible épaisseur par rapport à sa surface totale. Sa structure en mousse lui confère des propriétés, notamment de souplesse. De plus, le matériau thermoplastique utilisé présente, sous forme de mousse, des caractéristiques d'élasticité. Le pavé 8 offre ainsi un contact moelleux.

Les zones prédéterminées 9 sont prévues sur le moule 5, par exemple, en fonction de la dimension de l'objet multicouche 1, afin d'obtenir les déformations 2 en creux et/ou en bosses aux endroits désirés suivant le profil déterminé sur ledit objet multicouche 1.

Pour cela, suivant l'exemple particulier de mise en oeuvre représenté à la figure 2, la matrice 4 présente un creux et le poinçon 3, en vis-à-vis, une saillie, apte à former une bosse sur l'objet multicouche 1.

Le pavé de mousse est apte à suivre le profil de la déformation 2. Il présente donc, par exemple, une surface sensiblement identique à celle de ladite déformation 2.

En ce qui concerne les épaisseurs relatives de l'insert 6, de la peau 7 et du pavé de mousse thermplastique 8, elles sont, par exemple, de même ordre de grandeur. Quant à l'amplitude des déformations 2, elle peut être très supérieure à l'épaisseur de l'objet multicouche 1.

L'insert 10, la peau 7 et le pavé de mousse thermoplastique 8 étant en place, on presse ledit insert 6, ledit pavé de mousse 8 et ladite peau 7 entre le poinçon 3 et la matrice 4, selon les flèches repérées 10, pour obtenir l'objet multicouche 1.

Il peut s'agir, selon un mode particulier de réalisation, d'un pressage à chaud comme une thermo-compression, les températures utilisées devant être compatibles avec les matériaux mis en oeuvre afin de ne pas risquer une détérioration, notamment de la peau 7.

L'objet multicouche 1 offre ainsi, grâce aux pavés de mousse 8, un contact moelleux, agréable au toucher et souple en surface.

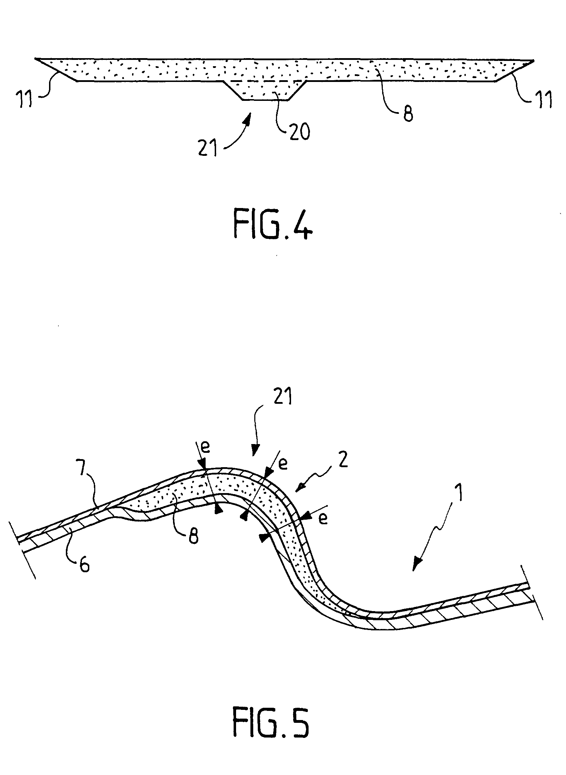

En se reportant également à la figure 4, on constate que, selon l'invention, on prévoit en outre au moins une surépaisseur 20 sur le pavé de mousse 8, notamment au niveau d'une ou plusieurs régions 21 destinées à être placées en vis-à-vis des sommets desdites déformations 2. Par sommets, on entend, notamment, parties des déformations 2 plus particulièrement courbées et présentant un rayon de courbure important par rapport au plan de l'objet.

On forme lesdites surépaisseurs 20, préalablement à l'introduction dudit pavé de mousse 8 dans le moule 5, par exemple selon un profil sensiblement trapézoïdal, le sommet dudit trapèze étant prévu, notamment, en regard desdites déformations 2.

Comme illustré par la figure 5, ce mode de réalisation permet d'éviter un écrasement éventuellement trop important du pavé de mousse 8 et assure la régularité de son épaisseur e au niveau desdits sommets, après pressage. Les surépaisseurs 20 renforcent ainsi l'aspect esthétique et/ou la souplesse de surface de l'objet multicouche 1, même en cas de déformations 2 présentant une courbure fortement accentuée.

On prévoit, éventuellement, un biseau 11, au moins partiellement, sur la périphérie du pavé de mousse 8. Ledit biseau 11 est formé, notamment, par poinçonnage, préalablement à l'introduction du pavé 8 dans le moule 5.

Cette opération peut être effectuée à haute température afin d'améliorer le tranchant du biseau 11. Par haute température, on entend une température, par exemple, plus élevée que celle mise en oeuvre lors du pressage.

Comme représenté à la figure 3, on prévoit également, au moins partiellement, dans le moule 5, un entrefer 12 entre la matrice 4 et le poinçon 3, modifiés au niveau de la ou desdites zones 9. On choisira ainsi, par exemple, un entrefer 12 supérieur à l'entrefer rencontré dans le moule 4, ailleurs que dans les zones prédéterminées 9.

L'entrefer 12 est ainsi, par exemple, légèrement inférieur à la somme des épaisseurs de l'insert 6, de la peau 7 et du pavé de mousse 8 avant pressage.

La combinaison du biseau 11 et de l'entrefer élargi 12 permet de s'affranchir d'un positionnement précis du pavé de mousse 8 par rapport aux zones prédéterminées 9. Ceci facilite la fabrication et permet de diminuer les temps de cycle.

De plus, le pavé de mousse 8, après pressage, est légèrement comprimé. La mousse travaille donc en extension et permet de tendre la peau 7. L'objet multicouche 1 ne présente donc plus, contrairement aux procédés actuellement connus, de traces d'outillage, notamment à la périphérie des déformations 2 de la couche intermédiaire de mousse.

Si l'on se reporte de nouveau à la figure 2, on constate que l'on réalise la modification d'entrefer 12 par la seule modification de la côte de l'élément du moule 5 en vis-à-vis duquel est prévu l'insert 6. Selon le cas de figure représenté, il s'agit du poinçon 3. La modification d'entrefer 12 est visualisée par les pointillés, repérés 13, qui représentent la côte que suivrait l'entrefer si ledit entrefer 12 n'était pas élargi.

La modification d'entrefer peut également, par exemple, être modulée dans les zones du moule 5 en vis-à-vis desquelles est prévu le biseau 11 du pavé de mousse thermoplastique 8.

On place ledit biseau 11, par exemple, en regard de l'insert 6.

Si l'on se reporte de nouveau aux figures 3 et 4, on constate que, selon l'invention, on réalise l'insert 6, notamment, préalablement au pressage, par moulage basse pression d'une résine thermoplastique. L'opération est mise en oeuvre, par exemple, dans le moule 5.

Suivant un autre mode de réalisation, on réalise l'insert 6, par exemple, à partir d'une plaque de matériau composite chauffée préalablement et/ou simultanément au pressage. Il peut s'agir, notamment, d'un matériau connu de l'homme de l'art sous le nom de woodstock.

Suivant le mode particulier de réalisation représenté, on positionne à plat la peau 7 et le pavé de mousse 8 entre le poinçon 3 et la matrice 4, préalablement au pressage.

La peau 7 est également, par exemple, maintenue et/ou étirée dans un cadre non représenté. Elle peut aussi, notamment, être pré-appliquée sur l'élément du moule 5 en vis-à-vis duquel elle est positionnée. Le pavé de mousse 8 est alors placé en vis-à-vis de ladite peau 7 au niveau d'une des zones prédéterminées 9. Ce pré-assemblage a lieu par exemple à froid.

Dans le cas d'un insert 6 constitué d'un panneau composite, ce dernier est également, par exemple, placé à plat, sensiblement parallèlement à la peau 7.

Naturellement, dans tous les cas de figures évoqués ci-dessus, conformément à l'invention, le pavé de mousse 8 est prévu entre l'insert 6 et la peau 7.

Selon l'invention, on réalise, par exemple, ledit pavé 8, à partir d'une mousse de polypropylène. Il peut s'agir également de polyéthylène ou autre.

Dans le cas d'un moulage basse pression de l'insert 6, on assure l'adhésion entre ledit insert 6 et la peau 7 et/ou le pavé de mousse 8, en réalisant l'opération de pressage quand ledit insert est encore légèrement malléable.

Dans le cas d'un insert 6 constitué par un matériau composite, on assure l'adhésion entre ledit insert 6, la peau 7 et/ou le pavé de mousse 8, grâce à une couche thermofusible 14 de matériau adhérent, prévu sur ledit insert 6.

En ce qui concerne l'adhésion de la peau 7 et du pavé de mousse 8, elle est réalisée, par exemple, par pré-encollage de chacune de leur face placée en regard.

Naturellement, d'autres mises en oeuvre de la présente invention à la portée de l'homme de l'art, auraient pu être envisagées sans pour autant sortir du cadre de la présente demande tel que défini dans les revendications.

## Revendications

1. Procédé de fabrication d'un objet multicouche (1), notamment destiné à l'habillage intérieur des carrosseries de véhicules, présentant des déformations (2) en creux et/ou en bosses, plus ou moins importantes, suivant un profil déterminé, dans lequel :
- on prévoit entre un poinçon (3) et une matrice (4) d'un moule (5), une première couche d'un matériau constituant un insert (6), recouvert au moins partiellement d'une seconde couche, notamment textile, constituant une peau (7),
- on forme indépendamment un ou plusieurs pavés de mousse thermoplastique (8),
- on interpose ledit ou lesdits pavés de mousse (8) entre ledit insert (6) et ladite peau (7), dans ledit moule (5), au niveau d'une ou plusieurs zones prédéterminées (9), localisées en fonction desdites déformations (2),
- on presse ledit insert (6), ledit ou lesdits pavés de mousse (8) et ladite peau (7) entre ledit poinçon (3) et ladite matrice (4) pour obtenir ledit objet multicouche (1), **caractérisé par le fait que**
- l'on prévoit au moins une surépaisseur (20) sur ledit ou lesdits pavés de mousse (8) au niveau d'une ou plusieurs régions (21) destinées à être placées en vis-à-vis des sommets desdites déformations (2).

2. Procédé selon la revendication 1, **caractérisé par le fait que** l'on prévoit un biseau (11), au moins partiellement, sur la périphérie dudit ou desdits pavés de mousse (8).

3. Procédé selon la revendication 1, **caractérisé par le fait que** l'on prévoit, au moins partiellement, dans ledit moule (5) un entrefer (12), entre ladite matrice (4) et ledit poinçon (3) modifiés au niveau de la ou desdites zones (9).

4. Procédé selon la revendication 2, **caractérisé par le fait que** l'on forme ledit biseau (11) préalablement à l'introduction dans ledit moule (5), par poinçonnage.

5. Procédé selon la revendication 3, **caractérisé par le fait que** l'on réalise la modification d'entrefer (12) par la semodification de la côte de l'élément dudit moule (5) en vis-à-vis duquel est prévu ledit insert (6).

6. Procédé selon la revendication 2, **caractérisé par le fait que** l'on placet ledit biseau (11) en regard dudit insert (6).

7. Procédé selon la revendication 1, **caractérisé par le fait que** l'on forme lesdites surépaisseurs (20), préalablement à l'introduction dudit ou desdits pavés de mousse (8) dans ledit moule (5), selon un profil sensiblement trapézoïdal.

8. Procédé selon la revendication 1, **caractérisé par le fait que** l'on réalise ledit insert (6) préalablement au pressage, par moulage basse pression d'une résine thermoplastique.

9. Procédé selon la revendication 1, **caractérisé par le fait que** l'on réalise ledit insert (6) à partir d'une plaque de matériau composite, chauffée préalablement et/ou simultanément au pressage.

10. Procédé selon la revendication 1, **caractérisé par le fait que** l'on positionne à plat ladite peau (7) et ledit ou lesdits pavés de mousse (8) entre ledit poinçon (3) et ladite matrice (4), préalablement au pressage.

11. Procédé selon la revendication 1, **caractérisé par le fait que** l'on réalise ledit ou lesdits pavés (8) à partir d'une mousse de polypropylène.

## Claims

1. Process for manufacturing a multi-layer object (1), designed, in particular, for the interior trim of vehicle bodies, having inwardly and/or outwardly projecting deformations (2), of varying sizes, according to a determined profile, wherein:
- there is provided between a punch (3) and a die (4) of a mould (5), a first layer of a material constituting an insert (6), covered at least partially by a second layer, in particular a textile layer, constituting a skin (7);
- one or more blocks of thermoplastic foam (8) are formed separately;
- said block or said blocks of foam (8) are interposed between said insert (6) and said skin (7), in said mould (5), in the area of one or more predetermined zones (9), located as a function of said deformations (2);
- said insert (6), said block or blocks of foam (8) and said skin (7) are pressed between said punch (3) and said die (4) to obtain said multi-layer object (1), **characterised by** the fact that
- at least one additional thickness (20) is provided on said block or blocks of foam (8) in the area of one or more regions (21) designed to be placed facing the apices of said deformations (2).

2. Process according to claim 1, **characterised by** the fact that a bevel (11) is provided, at least partially, on the periphery of said block or blocks of foam (8).

3. Process according to claim 1, **characterised by** the fact that an air gap (12) is provided, at least partially, in said mould (5), between said die (4) and said punch (3) modified in the area of said zone or zones (9).

4. Process according to claim 2, **characterised by** the fact that said bevel (11) is formed prior to introduction into said mould (5), by punching.

5. Process according to claim 3, **characterised by** the fact that the modification of the air gap (12) is accomplished by modifying only the dimension of the member of said mould (5) facing which said insert (6) is provided.

6. Process according to claim 2, **characterised by** the fact that said bevel (11) is placed opposite said insert (6).

7. Process according to claim 1, **characterised by** the fact that said additional thicknesses (20) are formed, prior to the introduction of said block or blocks of foam (8) into said mould (5), so as to have a substantially trapezoidal profile.

8. Process according to claim 1, **characterised by** the fact that said insert (6) is produced prior to pressing, by low-pressure moulding a thermoplastic resin.

9. Process according to claim 1, **characterised by** the fact that said insert (6) is produced from a plate of composite material, heated prior to and/or simultaneously with pressing.

10. Process according to claim 1, **characterised by** the fact that said skin (7) and said block or blocks of foam (8) are placed flat between said punch (3) and said die (4), prior to pressing.

11. Process according to claim 1, **characterised by** the fact that said block or blocks (8) are produced from a polypropylene foam.

## Patentansprüche

1. Verfahren zur Herstellung eines mehrschichtigen Gegenstands (1), nämlich für die Innenverkleidung von Fahrzeugkarosserien, der mehr oder weniger große hohlgewölbte und/oder erhabene Verformungen nach einem bestimmten Profil aufweist, bei dem:
- zwischem einem Stempel (3) und einem Gesenk (4) einer Gußform (5) eine erste Schicht eines einen Einsatz bildenden Materials vorgesehen wird, die wenigstens zum Teil mit einer zweiten Schicht, nämlich aus Textil, überzogen wird, welche eine Haut (7) bildet,
- unabhängig ein oder mehrere thermoplastische Schaumstoffplatten (8) geformt werden,
- die genannte bzw. genannten Schaumstoffplatten (8) zwischen den genannten Einsatz (6) und die genannte Haut (7) in der genannten Gußform (5) gelegt werden, im Bereich einer oder mehrerer vorbestimmter, je nach den genannten Verformungen (2) lokalisierter Zonen (9),
- der genannte Einsatz (6), die genannte bzw. genannten Schaumstoffplatten (8) und die genannte Haut (7) zwischen dem genannten Stempel (3) und dem genannten Gesenk (4) gepreßt werden, um den genannten merschichtigen Gegenstand (1) zu erhalten, **dadurch gekennzeichnet, daß**
- wenigstens eine Überdicke (20) auf der bzw. den genannten Schaumstoffplatten (8) im Bereich einer bzw. mehrerer Zonen (21), die den Spitzen der genannten Verformungen (2) gegenüber anzubringen sind, vorgesehen wird.

2. Verfahren nach Anspruch 1, **dadurch gekennzeichnet, daß** eine Abschrägung (11) wenigstens teilweise an dem Umkreis der genannten Schaumstoffplatte bzw. -platten (8) vorgesehen wird.

3. Verfahren nach Anspruch 1, **dadurch gekennzeichnet, daß** in der genannten Gußform (5) wenigstens ein Spalt (12) zwischen dem genannten Gesenk (4) und dem genannten Stempel (3), die im Bereich der genannten Zone bzw. Zonen (9) geändert sind, vorgesehen wird.

4. Verfahren nach Anspruch 2, **dadurch gekennzeichnet, daß** die genannte Abschrägung (11) vor der Einführung in die genannte Gußform (5) durch Stanzen gebildet wird.

5. Verfahren nach Anspruch 3, **dadurch gekennzeichnet, daß** die Änderung des Spaltes (12) nur durch die Änderung der Abmessung des Teils der genannten Gußform (5), gegenüber dem der genannte Einsatz (6) vorgesehen wird, erfolgt.

6. Verfahren nach Anspruch 2, **dadurch gekennzeichnet, daß** die genannte Abschrägung (11) dem genannten Einsatz (6) gegenüber angebracht wird.

7. Verfahren nach Anspruch 1, **dadurch gekennzeichnet, daß** die genannten Überdicken (20) vor der Einführung der genannten Schaumstoffplatte bzw. -platten (8) in die genannte Gußform (5) nach einem im wesentlichen trapezförmigen Profil gebildet werden.

8. Verfahren nach Anspruch 1, **dadurch gekennzeichnet, daß** der genannte Einsatz (6) vor der Preßung durch Niederdruck-Formgebung eines Thermoplastharzes hergestellt wird.

9. Verfahren nach Anspruch 1, **dadurch gekennzeichnet, daß** der genannte Einsatz (6) aus einer vor und/oder gleichzeitig mit der Preßung erwärmten Verbundmaterialplatte hergestellt wird.

10. Verfahren nach Anspruch 1, **dadurch gekennzeichnet, daß** die genannte Haut (7) vor der Preßung flach und die genannte bzw. genannten Schaumstoffplatten (8) zwischen den genannten Stempel (3) und das genannte Gesenk (4) positioniert werden.

11. Verfahren nach Anspruch 1, **dadurch gekennzeichnet, daß** die genannte bzw. genannten Schaumstoffplatten (8) aus einem Polypropylenschaumstoff hergestellt werden.
